# EUROPÄISCHE PATENTSCHRIFT

(11) **EP 0 398 237 B1**
(45) Veröffentlichungstag und Bekanntmachung des Hinweises auf die Patenterteilung: **06.09.1995**
(21) Anmeldenummer: 90109107.4
(22) Anmeldetag: 15.05.1990
(51) Int. Cl.: H04R 25/00, B23C 1/16, B23Q 33/00, G05B 19/42

(54) **Verfahren zur Herstellung von Hörgeräten**
Method for manufacturing hearing aids
Procédé pour la fabrication de prothèses auditives

(30) Priorität: 17.05.1989 CH 1828/89
(43) Veröffentlichungstag der Anmeldung: 22.11.1990
(73) Patentinhaber: ASCOM AUDIOSYS AG, CH-3175 Flamatt (CH)
(72) Erfinder: Bärtschi, Anton, CH-1713 St. Antoni (CH)
(74) Vertreter: Scheidegger, Werner & Co.

(56) Entgegenhaltungen:
- EP-A- 0 091 876
- DE-A- 3 542 616
- US-A- 4 617 429
- US-A- 4 663 720
- PATENT ABSTRACTS OF JAPAN vol. 11, no. 212 (E-522)(2659) 9. Juli 1987

## Beschreibung

Die Erfindung betrifft ein Verfahren zur Herstellung von im Ohr zu tragenden Hörgeräten, mit in einer der individuellen Form des Ohr-Innenraums angepassten Ohrmulde eingebautem elektronischem Verstärker und Schallwandler.

Im Ohr zu tragende Hörgeräte dieser Art werden meistens individuell in ihren äusseren Abmessungen auf das Ohr des jeweiligen Trägers angepasst, was bisher in der Weise erfolgte, dass man zunächst von dem Ohrinnenraum einen Abdruck erstellen musste, um mit diesem eine Giessform beispielsweise aus Gips zu erstellen, mittels der dann die Ohrmulde oder Ohrschale aus Kunststoffmaterial als genaues Passstück für die jeweilige Ohrform hergestellt werden kann. In diese Ohrmulde werden dann der elektronische Verstärker und der Schallwandler eingebaut, wobei die räumliche Anordnung dieser Komponenten den Abmessungen des Innenraums der Ohrmulde angepasst werden muss (s. z.B. US-A-4 617 429).

Dieses Herstellungsverfahren besitzt Nachteile in verschiedener Hinsicht, weil das Giessen der Ohrmulde und der Einbau der Komponenten in speziellen Labors erfolgen müssen, da ein Hörgerätefachmann meistens nicht über die notwendigen Einrichtungen und das giesstechnische Knowhow verfügt, sodass der Käufer eines Hörgerätes dieses nicht sofort beim Hörgerätefachmann sondern erst nach einer längeren Wartefrist erhalten kann. Damit ist dieses Herstellungsverfahren aufwendig und teuer und beinhaltet ausserdem viele mögliche Fehlerquellen, sodass die Rückweisungsquote bei der Anprobe des fertiggestellten Hörgerätes relativ hoch ist.

Die US-A-4 663 720 offenbart die Herstellung eines Zahnprothesenkörpers unter Verwendung von gespeicherten Vermessungsdaten zur Steuerung der maschinellen Bearbeitung eines Rohlings. Dank diesem Verfahren kann zwar ein passender, ggf. komplexer Grundkörper hergestellt werden, ähnlich wie bei einem Verfahren durch Giessen, würde aber das Problem des Einbaus von Gerätekomponenten keinesfalls lösen. Dazu wäre die anschliessende Herstellung eines komplizierten Innenraums erforderlich (erübrigt sich jedoch bei einer Zahnprothese), was wiederum zu einer Schwächung, wenn nicht gar Zerstörung des Grundkörpers führen könnte.

Der Erfindung lag daher die Aufgabe zugrunde, zur Vermeidung der vorgenannten Nachteile ein Herstellungsverfahren anzugeben, mit welchem der Hörgerätefachmann selbst in sehr kurzer Zeit und in äusserst präziser Ausführung eine zu der Ohrform des jeweiligen Hörgeräteträgers genau passende Ohrmulde herstellen kann, sodass der Käufer sein fertiges Gerät sofort erhalten kann.

Diese Aufgabe wird durch ein Verfahren gemäss dem Kennzeichen von Anspruch 1 gelöst, wobei die Vermessung des Ohrinnenraumes beispielsweise mittels Laser oder Image processing erfolgt.

Das Herstellungsverfahren wird nachfolgend anhand eines Beispiels näher beschrieben. Die Zeichnungen verdeutlichen die einzelnen Verfahrensschritte. Es zeigen:
Fig. 1 das Prinzip der Vermessung des Ohr-Innenraums mittels Laser und das Abspeichern der Vermessungsdaten in einem Computer;
Fig. 2 eine vom Computer gesteuerte Fräsmaschine;
Fig. 3 einen zylindrischen Rohling für die Ohrmulde in grösserem Massstab und vor der Bearbeitung durch die Fräsmaschine.

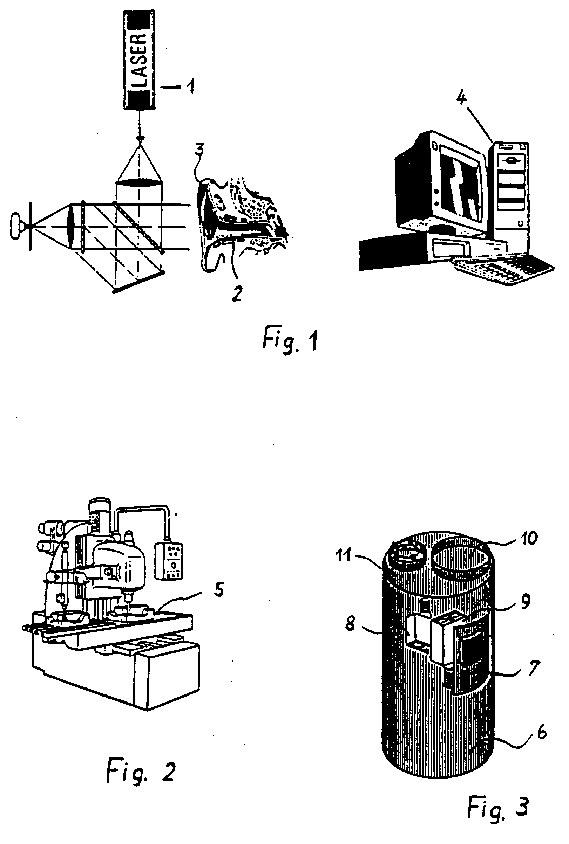

Gemäss Fig. 1 wird mittels eines Lasers 1 der Innenraum 2 eines Ohrs 3 bis zum Trommelfell vermessen. Die erhaltenen Vermessungsdaten werden in einem elektronischen Speicher 4 gespeichert, vorzugsweise ist dies ein Computer, in dem die erhaltenen Daten für die weitere Verwendung aufbereitet werden.

Eine in Fig. 2 dargestellte Fräsmaschine 5 wird vom Computer 4 gesteuert. Auf der Fräsmaschine ist ein aus Kunststoffmaterial bestehender Rohling 6 eingespannt, der in Fig. 3 in grösserem Massstab dargestellt ist und der durch Fräsen derart bearbeitet wird, dass er die zum Ohr-Innenraum 2 genau passende Form erhält. In den aus Kunststoffmaterial bestehenden zylindrisch ausgebildeten Rohling 6 sind die Elektronik 7, das Mikrofon 8, der Hörer 9, das Batteriefach 10 und das Volumenpotenziometer 11 eingegossen. Es darf natürlich nur das diese Komponenten umgebende Kunststoffmaterial weggefräst werden. Weil es unterschiedliche menschliche Ohrformen gibt, wird auch eine Auswahl von verschiedenen Rohlingen hergestellt, in denen die Anordnung dieser Komponenten auch unterschiedlich ist, damit jeweils jener Rohling ausgewählt werden kann, bei dem die für das Ausfräsen der jeweiligen Ohrmulde günstigste Anordnung der Komponenten vorliegt. Für jeden der verschiedenen Rohlinge ist die Lage dieser Komponenten in diesem Rohling im Computer gespeichert, sodass der Computer auch den richtigen Rohling auswählt, weil auch die Vermessungsdaten des Ohr-Innenraums im Computer gespeichert sind. Um bei dem Rohling 6 im Hinblick auf die Fräsarbeit den Raum noch geschickter auszunutzen, kann die Elektronik 7, die aus einem bei Hörgeräten heute üblichen Verstärker besteht, je nach Bedarf in kleinere Einheiten unterteilt werden, welche durch elektrische Leiter verbunden werden.

## Patentansprüche

1. Verfahren zur Herstellung von im Ohr zu tragenden Hörgeräten, mit in einer der individuellen Form des Ohrinnenraums angepassten Ohrmulde eingebautem elektronischem Verstärker und Schallwandler, dadurch gekennzeichnet, dass der elektronische Verstärker und Schallwandler unter Bildung eines Ohrmulden-Rohlings in Kunststoffmaterial eingegossen werden; dass zur Herstellung der individuellen Form der Ohrmulde der Innenraum des Ohrs bis zum Trommelfell vermessen und die Vermessungsdaten in einem elektronischen Speicher gespeichert werden; und dass mit den gespeicherten Vermessungsdaten eine Fräsmaschine gesteuert und damit aus einem vorgefertigten Ohrmulden-Rohling der verlangte individuelle Ohrmulden-Körper herausgefräst wird.

2. Verfahren nach Anspruch 1, dadurch gekennzeichnet, dass der Innenraum des Ohrs mit Hilfe eines Lasers (1) oder mittels Image processing ausgemessen wird.

3. Verfahren nach Anspruch 1, dadurch gekennzeichnet, dass in einem zylindrischen Ohrmulden-Rohling (6) aus Kunststoffmaterial ein Mikrofon (8), ein Hörer (9), ein Batteriefach (10), ein Volumenpotenziometer (11) und die Verstärker-Elektronik (7) als Komponenten eingegossen werden und aus dem Rohling (6) der individuelle Ohrmulden-Körper herausgefräst wird und dass verschiedene, zur Auswahl stehende Rohlinge hergestellt werden, in denen die genannten Komponenten in unterschiedlicher Anordnung eingegossen werden und die Lage der Komponenten im jeweiligen Rohling im Speicher gespeichert wird, um für unterschiedliche Ohrformen den jeweiligen Rohling mit der für das Ausfräsen des Ohrmulden-Körpers günstigsten Anordnung der Komponenten auszuwählen.

4. Hörgerät mit einer Ohrmulde, hergestellt gemäss Verfahren nach einem der Ansprüche 1 bis 3, dadurch gekennzeichnet, dass ein Körper aus Kunststoffmaterial mit eingegossenem elektrischen Verstärker und Schallwandler eine der individuellen Ohrform angepasste, durch Fräsen hergestellte Körperform aufweist.

## Claims

1. Method for manufacturing hearing aids to be worn in the ear, having an electronic amplifier and sound transducer incorporated in an ear shell which is matched to the individual shape of the inner space of the ear, characterized in that the electronic amplifier and sound transducer are cast in plastics material, thereby forming an ear-shell blank; in that, in order to produce the individual shape of the ear shell, the inner space of the ear is measured as far as the ear drum and the measurement data are stored in an electronic memory; and in that the stored measurement data are used to control a milling machine and the required individual ear-shell body is thus milled from a prefabricated ear-shell blank.

2. Method according to Claim 1, characterized in that the inner space of the ear is measured with the aid of a laser (1) or by means of image processing.

3. Method according to Claim 1, characterized in that a microphone (8), an earphone (9), a battery compartment (10), a volume potentiometer (11) and the amplifier electronics (7) are cast as components in a cylindrical ear-shell blank (6) made of plastics material, and the individual ear-shell body is milled from the blank (6), and in that a choice of different blanks is manufactured, in which the said components are cast in varying arrangements, and the position of the components in the respective blank is stored in the memory, in order to select for different ear shapes the respective blank having an arrangement of the components which is the most favourable for the milling of the ear-shell body.

4. Hearing aid having an ear shell, manufactured in accordance with the method according to one of Claims 1 to 3, characterized in that a body made of plastics material and having an electrical amplifier and sound transducer cast therein has a body shape which is matched to the individual ear shape and produced by milling.

## Revendications

1. Procédé pour la fabrication de prothèses auditives comprenant un amplificateur électronique et un transducteur de son enfermé dans un corps de prothèse conformé à la forme individuelle de l'espace intérieur d'une oreille, caractérisé en ce que l'amplificateur électronique et le transducteur de son sont coulés dans une masse en matière plastique tout en formant une forme brute d'un corps de prothèse; en ce que l'espace intérieur de l'oreille jusqu'au tympan est mesuré pour fabriquer la forme individuelle du corps de prothèse et en ce que les dates des mesures sont mémorisées dans une mémoire élctronique; et en ce que les dates des mesures mémorisées sont utilisées pour commander une fraiseuse pour fraiser un corps de prothèse individuel à partir de la forme brute d'un corps préfabriqué.

2. Procédé selon la revendication 1, caractérisé en ce que l'espace intérieur de l'oreille est mesuré à l'aide d'un laser (1) ou par image processing.

3. Procédé selon la revendication 1, caractérisé en ce qu'un microphone (8), un écouteur (9), un compartiment de batterie (10), un potentiomètre pour le contrôle du volume (11) et l'amplificateur électronique (7) sont coulés sous forme de composantes dans une forme brute cylindrique (6) d'un corps de prothèse en matière plastique et en ce que l'on produit par fraisage le corps de prothèse individuel à partir de ladite forme brute et en ce que différentes formes brutes qui sont librement à disposition sont fabriqués dans lesquels lesdites composantes sont coulés dans des positions différentes et en ce que la position des composantes dans chaque forme brute est mémorisée pour permettre de choisir pour des formes d'oreilles différentes la forme brute présentant l'arrangement des composantes le plus favorable pour le fraisage du corps de prothèse.

4. Prothèse auditive fabriquée selon le procédé d'après l'une des revendications 1 à 3, caractérisée en ce qu'un corps de prothèse en matière plastique avec un amplificateur électronique et un transducteur de son sont coulés dans cette matière présente une forme fabriquée par fraisage adaptée à la forme individuelle d'une oreille.
